# EUROPEAN PATENT SPECIFICATION

(11) **EP 1 935 081 B1**
(45) Date of publication and mention of the grant of the patent: **14.11.2012**
(21) Application number: 06810241.7
(22) Date of filing: 11.09.2006
(51) Int. Cl.: H02K 15/12, H02K 3/44

(54) **ELECTRIC MOTOR AND ELECTRIC TOOL WITH THE SAME**
ELEKTROMOTOR UND ELEKTROWERKZEUG DAMIT
MOTEUR ELECTRIQUE ET OUTIL ELECTRIQUE POURVU DE CE DERNIER

(30) Priority: 16.09.2005 JP 2005269603
(43) Date of publication of application: 25.06.2008
(73) Proprietor: HITACHI KOKI CO., LTD., Tokyo 108-6020 (JP)
(72) Inventor: KAWAMURA, Youichi, Ibaraki 312-8502 (JP); YOSHIDA, Kenichirou, Ibaraki 312-8502 (JP); TANIMOTO, Hideyuki, Ibaraki 312-8502 (JP); FUKUDA, Kenji, Ibaraki 312-8502 (JP)
(74) Representative: Strehl Schübel-Hopf & Partner
(86) International application number: PCT/JP2006/318449
(87) International publication number: WO 2007/032511

(56) References cited:
- GB-A- 747 339
- JP-A- 3 070 441
- JP-A- 6 122 133
- JP-A- 59 159 638
- JP-A- 2004 336 998
- US-A- 5 015 159

## Description

### Technical Field

The present invention relates to an electric motor having a resin molding armature in which a coil wound in slots of a core of the armature is covered with molding resin, also relates to an electric tool with the electric motor.

### Background Art

In the field of portable electric tools such as a disk grinder used for grinding work, commutator motors are commonly used as a rotary power source because the commutator motors are relatively small and light and further the starting torque is high. In this electric tool, it is common that a power transmitting housing portion for accommodating a gear, a spindle and so forth, which transmit an output of the rotary shaft to a tool such as a disk grinder attached to a forward end portion of the rotary shaft, is provided on one end side in the rotary shaft direction of a motor housing portion for accommodating the commutator motor. Further, it is common that a handle housing portion for accommodating an electric circuit such as a drive switch is provided on the other end side in the rotary shaft direction of the motor housing portion.

In the electric tool, the following problems may be encountered. Grinding waste, which is generated when iron is ground, and cutting waste, which is generated when stone is cut, enter a motor housing through a window for a blast of cooling air provided in the handle housing portion or the power transmitting housing portion. Therefore, a coil of an armature is damaged. Especially, an end portion of the coil protruding from a core slot is damaged, and abrasion or breaking of wire is caused.

In order to solve the problems of abrasion or breaking of wire, as disclosed in JP-A-7-123618, JP-A-8-140318, and JP-A-7-123642, such a well-known technique is provided that a coil portion in the core slot of the armature and a coil end portion outside the core slot are covered with a molding resin layer by a die molding. By this technique, the coil portion in the core slot of the armature and the coil end portion outside the core slot are covered with the molding resin layer. Therefore, it is possible to prevent abrasion or breaking of wire caused by the intrusion of the grinding waste or the cutting waste. When material of high heat conductivity is used for the molding resin in this technique, it is possible to prevent the occurrence of abrasion or breaking of wire without deteriorating the cooling performance.

US 5 015 159 A discloses a fuel pump with an electro motor including an armature with resin-filled slots in the fuel flow path. Another related electro motor, used for an electric tool, is disclosed in GB 747 339 A.

### Disclosure of Invention

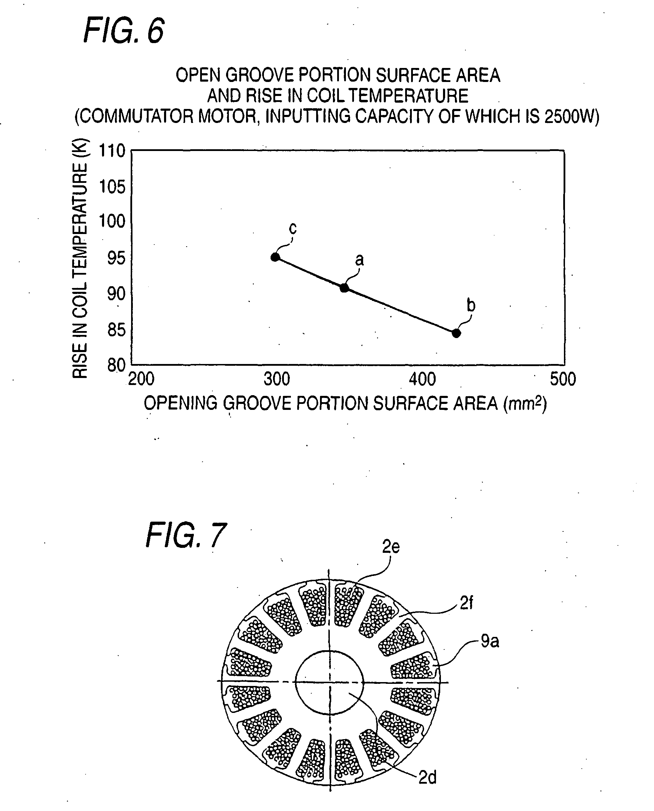

However, in the resin molding armature described above, in general, in order to simplify the structure of the die so as to enhance the productivity and in order to reduce a windage loss caused on an outer circumferential face of the core of the armature, as shown in Fig. 7, the molding resin layer 9a is filled into the slots of the core 2f, on which the coil 2e is wound, to the same circumferential face as the outer circumferential face of the core, so that all the circumferential faces of the core 2f can be made to be flat. Therefore, the cooling effect of the armature is lowered. Especially, the cooling effect of the coil 2e is lowered and a coil temperature is raised. Especially, in the case of the electric tool, depending upon the circumstances of work, the electric tool is used being given a heavy load in many cases. Accordingly, it is necessary to prevent an excessive rise in the temperature of the coil.

An object of the present invention is to provide an electric motor having a resin molding armature, the cooling performance of the armature coil of which is enhanced.

Another object of the present invention is to provide an electric motor having a resin molding armature, the cooling performance of which is enhanced by providing an open groove for each core slot of the armature.

Still another object of the present invention is to provide a method of molding a molding armature or to provide a resin molding armature in which a relatively arbitrary open groove can be provided for each core slot of the armature and the number of dies, which are spilt, and the slide angle can be set without lowering the mass production property.

Still another object of the present invention is to provide an electric tool provided with an electric motor into which a resin molding armature is incorporated.

Representative features of the present invention, which has been accomplished to solve the above problems, will be explained as follows.

According to the present invention, an electric motor comprises an armature, the armature including: a core having a plurality of slots extending in an axial direction, fixed to a rotary shaft; a coil wound round the core in the axial direction in the plurality of slots; a pair of coil end portions arranged at both end portions in the axial direction of the core, at which the coil wound in the slots protrudes from the slots in the axial direction; a cooling fan fixed to the rotary shaft; and a molding resin filling layer for covering the coil wound in the plurality of slots and for filling the plurality of slots to the same circumferential face as the outer circumferential face of the core in each slot, the armature further including open grooves extending in the axial direction, formed on the circumferential face of the molding resin filling layer filled into the plurality of slots.

According to another implementation of the present invention, dimensions of a cross-section in the radial direction perpendicular to the axial direction of the open groove formed on the molding resin filling layer in each slot are different from dimensions of cross-sections formed in a pair of slots adjacent to the slot.

According to still another aspect of the present invention, the pair of coil end portions are respectively covered with a molding resin covering layer.

According to still another implementation of the present invention, the molding resin filling layer, which has been filled into each slot, is made up of a layer formed by conducting molding in such a manner that a die, which can be split into pieces at least in four directions in the radial direction of the core, is closed onto the outer circumferential face of the core and molding is conducted, and the open groove is formed by a protrusion for forming a groove provided in a cavity of the die

According to still another implementation of the present invention, an electric tool has an electric motor, the electric motor comprising an armature, the armature including: a core having a plurality of slots extending in an axial direction, fixed to a rotary shaft; a coil wound round the core in the axial direction in the plurality of slots; a pair of coil end portions arranged at both end portions in the axial direction of the core, at which the coil wound in the slots are protruded from the slots in the axial direction and ended; a cooling fan fixed to the rotary shaft; and a molding resin filling layer for covering the coil wound in the plurality of slots and for filling the plurality of slots to the same circumferential face as the outer circumferential face of the core in each slot, the armature further including open grooves extending in the axial direction formed on the circumferential face of the molding resin filling layer filled into the plurality of slots.

According to still another implementation of the present invention, in the electric tool, dimensions of a cross-section in the radial direction perpendicular to the axial direction of the open groove formed on the molding resin filling layer in each slot of the armature are different from dimensions of the cross-sections formed in a pair of slots adjacent to the slot.

According to still another implementation of the present invention, in the electric tool, the pair of coil end portions of the armature are respectively covered with a molding resin covering layer.

According to the above implementations, an open groove is provided which extends in the axial direction on the molding resin filling layer, and which covers the wounded coil, in each slot of the core of the armature. Therefore, heat generated by the armature, which is molded with resin, can be effectively cooled and a rise in the coil temperature can be suppressed.

The above and another object of the present invention and the above and another implementation of the present invention will become more clear by referring to the following descriptions of this specification and the accompanying drawings.

### Brief Description of Drawings

Fig. 1 is a partially sectional view showing an electric tool in which a commutator motor of embodiment is used.
Fig. 2 is a partially sectional view showing an overall arrangement of the resin molding armature of the first embodiment of the present invention.
Fig. 3 is a sectional view of the core portion of the resin molding armature shown in Fig. 2 taken on line A - A and Fig. 3 is also a sectional view of the die portion of the core portion.
Fig. 4 is an enlarged sectional view showing a core portion of the resin molding armature shown in Fig. 3.
Fig. 5 is an enlarged sectional view showing a core portion of the resin molding armature of the second embodiment of the present invention.
Fig. 6 is a characteristic diagram showing a rise in the temperature of the resin molding armature of the embodiment.
Fig. 7 is a sectional view showing a resin molding armature of the related art.

### Best Mode for Carrying Out the Invention

Referring to the drawings, an embodiment of the present invention will be explained in detail as follows. In this connection, in all the drawings for explaining the embodiment, like reference characters are used to indicate the same parts and the repeated explanations are omitted.

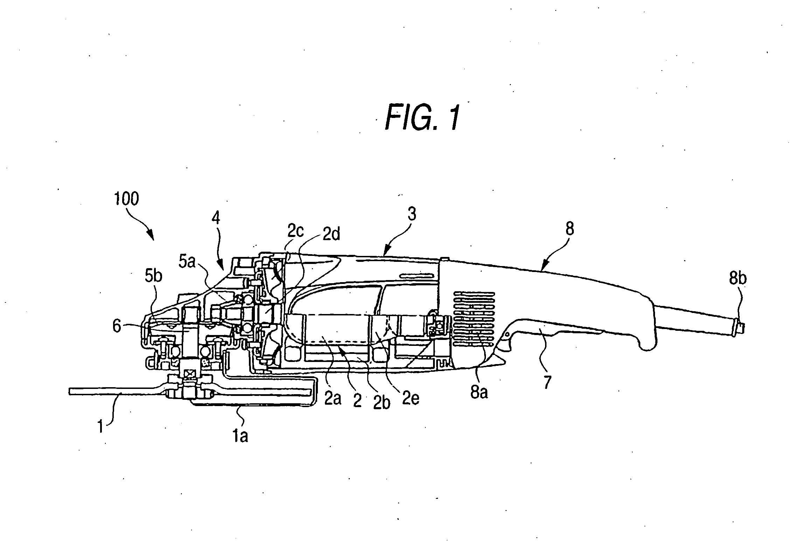

Fig. 1 is a sectional side view showing an electric tool in which a commutator motor of an embodiment of the present invention is applied to a disk grinder. First, referring to Fig. 1, an overall arrangement of the electric tool will be explained below. A disk grinder 100 includes: a motor housing 3 made of resin material for accommodating a commutator motor 2 (a universal motor) in which a resin molding armature 2a of the present invention is used; a gear cover 4 made of metallic material connected to one end side of the motor housing 3; a switch handle portion 8 for accommodating a switch 7 of the commutator motor 2 and a switch circuit (not shown); and an electric power supple cord 8b. The commutator motor 2 accommodated in the motor housing 3 includes: the resin molding armature 2a fixed to a rotary shaft 2d; and a stator 2b fixed to the motor housing 3. On an output side of the rotary shaft 2d, a cooling fan 2c is fixed. When the cooling fan 2c is rotated, outside air used for cooling (a blast of cooling air) is taken in from a suction window 8a formed in the switch handle portion 8. This blast of cooling air is made to flow in a gap formed among the motor housing portion 3, the resin molding armature 2a and the stator 2b and then discharged into the atmosphere from a discharge window (not shown) provided in the gear cover 4. In the gear cover 4, a first bevel gear (a pinion gear) 5a, which is attached to the rotary shaft 2d of the commutator motor 2, is accommodated, and a second bevel gear 5b, which is meshed with the first bevel gear 5a, is also accommodated. A direction of the torque of the rotary shaft 2d of the commutator motor 2 is converted to a direction perpendicular to the direction of the torque of the rotary shaft 2d of the commutator motor 2, and the torque of the rotary shaft 2d is transmitted to a spindle 6. A disk-shaped grinder (a grinding stone) 1, which is a tool to be attached to the forward end portion, is attached to the spindle 6. Therefore, grinding or cutting work can be executed with this disk-shaped grinder 1. A semicircular portion of the disk-shaped grinder 1 is covered with a protective cover 1a

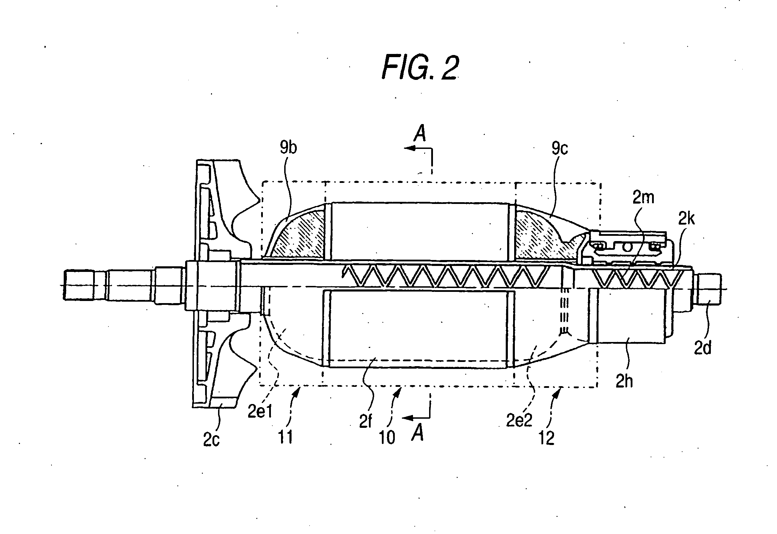

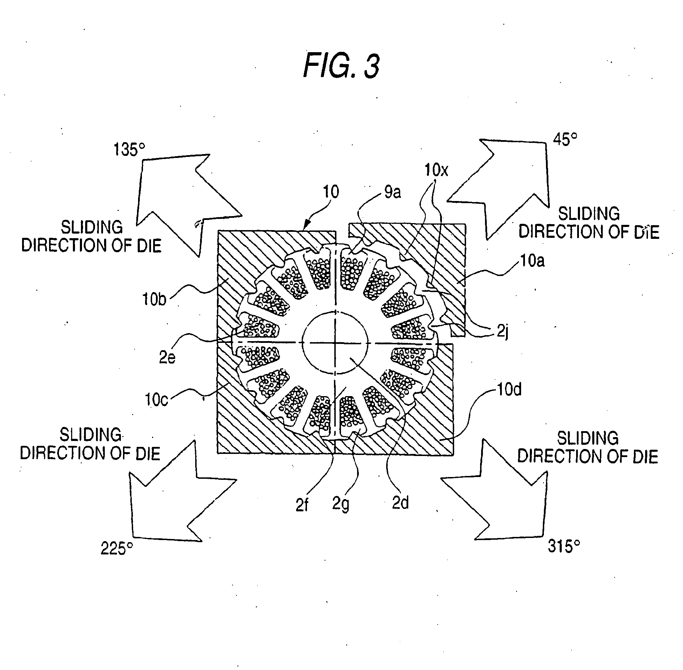

In the case where a worker uses the disk grinder 100, operation is conducted as follows. A drive electric power source of the commutator motor 2 is turned on by the switch 7 arranged in the switch handle portion 8. The worker holds the switch handle portion 8 and a side handle (not shown) provided in the gear cover portion 4, and pushes the disk grinder 1 to a workpiece (a workpiece to be machined) so as to conduct grinding work of iron material or conduct cutting work of stone material. For example, in the case of cutting stone material, cutting waste of stone material is generated in the process of cutting. The thus generated cutting waste of stone is sucked into the motor housing motor 3 from the suction window 8a provided in the switch handle portion 8. When the cutting waste is blown to the coil 2e of the commutator armature 2a, the coil 2e is damaged, which could be a cause of abrasion or breaking of wire. However, according to the resin molding armature 2a of the present invention, as shown in Fig. 2 and Fig. 3 (a sectional view taken on line A - A in Fig. 2), the coil 2e in the slot 2g of the core 2f is covered with the molding resin filling layer 9a, and the coil end portions 2e1, 2e2 of the coil 2e protruding to both end portions in the rotary shaft direction of the core 2f are respectively covered with the molding resin covering layers 9b, 9c. Accordingly, the coil 2e can be prevented from being damaged by foreign objects such as cutting waste or grinding waste. Further, as shown in Fig. 3, the open groove 2j for radiating (cooling) is formed in the rotary shaft direction of the core 2f on the molding resin filling layer 9a which covers the coil 2e provided in the core slot 2g. Therefore, a blast of cooling air, which is sucked by the cooling fan 2c, can effectively cool the heat generated by the resin molding armature 2a, especially the heat generated by the coil 2e. That is, the occurrence of abrasion or breaking of wire can be prevented by the open groove 2j without deteriorating the cooling effect of the resin molding armature 2a.

A structure and a manufacturing method of the resin molding armature 2a will be explained below referring to Figs. 2 and 3. The resin molding armature 2a is made by means of resin molding with the dies 10, 11, 12 which are schematically shown in Fig. 2. In this embodiment, the coil end portion dies 11, 12, which conduct molding of the molding resin covering layers 9b, 9c for covering a pair of coil end portions 2e1, 2e2, are respectively made up of a single body since the cavity inner circumferential faces of the dies 11, 12 are formed into a conical shape or a bowl shape, and the die, which can be split (slid) in the rotary shaft direction is closed and then molding is conducted.

On the other hand, concerning the core portion die 10 used for resin molding of the coil 2e in the slot 2g of the core 2f, in order to form the open groove 2j on an outer circumferential face of the molding resin filling layer 9a in the slot 2g, the core portion die 10 is made up of four members 10a, 10b, 10c, 10d which can be split at least in four directions in the radial direction of the core 2f. The molding resin filling layer 9a is formed being molded when the die 10 made up of these four members are closed onto the outer circumferential face of the core 2f as shown in Fig. 2. The open groove 2j is formed by the protrusion 10x of each die member 10a to 10d. In this connection, as shown in Fig. 2, the resin molding armature 2a is electrically insulated from the rotary shaft 2d by the resin insulating layer 2k which is embedded in the spiral groove 2m formed on the outer circumferential face of the rotary shaft 2d and which covers the outer circumferential face of the rotary shaft 2d. In this embodiment, since the motor housing 3 is also made of insulating material (resin material), the resin insulating layer 2k composes a double insulating structure together with the motor housing 3.

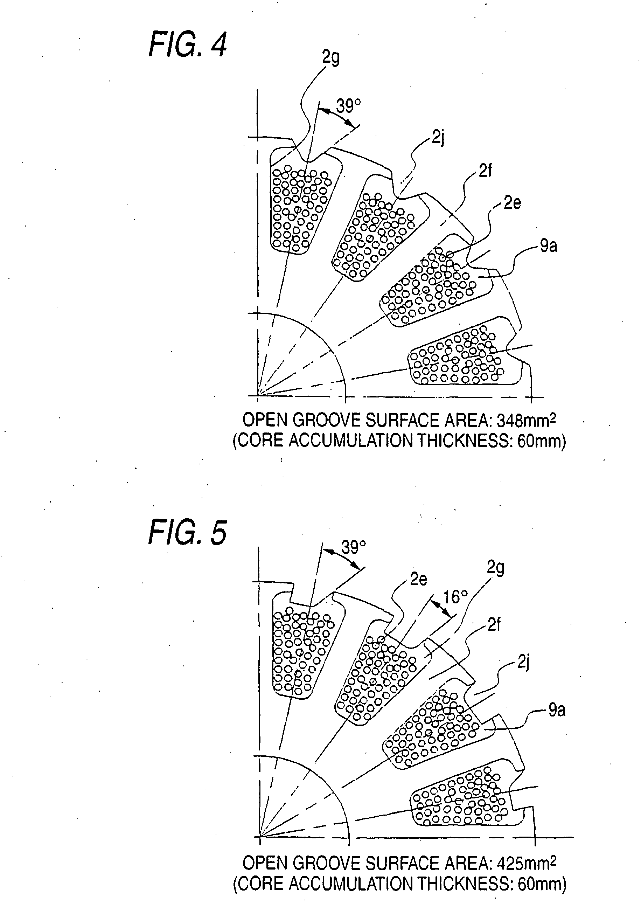

The embodiment of the core portion die 10 shown in Fig. 3 will be explained in more detail. In the commutator motor 2 of this embodiment, the number of slots 2g of the resin molding armature 2a is 16. As described before, the core portion die 10 is of the four split sliding type in which the die can be split into four metallic members 10a, 10b, 10c, 10d. Concerning the core portion die 10, one die (each die member 10a, 10b, 10c, 10d) covers four slots 2g. When the resin molding armature 2a is viewed in the rotary shaft direction, each die is slid from the center of the rotary shaft 2d in the radial direction at the interval of 90°. Fig. 4 is an enlarged view showing one fourth of the cross section of the core in which the open groove 2j shown in Fig. 3 is provided.

In the embodiment shown in Figs. 3 and 4, the shape of the open groove 2j, which is provided in each slot 2g on the outer circumferential face of the core 2f, has the same dimensions. While a positional relation between the sliding direction of the core portion die 10 and the slot 2g is being taken into account, in order to improve a mold releasing property of the resin molding armature 2a from the core portion die 10 after the completion of molding, it is necessary to set a draft of 5° in the sliding direction. When consideration is given to the above circumstances, it is preferable that a shape of the cross section of the open groove 2j is a substantial triangle as shown in Fig. 4. In other words, it is preferable that the shape of the cross section of the protrusion 10x of the core portion die 10 shown in Fig. 3 is protruded into a substantial triangle. As shown in Fig. 4, the wound coil 2e is accommodated in each slot 2g of the core 2f, and the molding resin layer 9a made of thermo-setting resin such as unsaturated polyester is filled between the coils 2e. On the outer circumferential face of the core 2f, the open groove 2j is provided for each slot 2g. Due to the foregoing, at the time of rotating operation of the resin mold armature 2a, a blast of cooling air generated by the cooling fan 2c flows in the open groove 2j. Further, since a cooling surface area of the resin molding armature 2a made up of the open groove 2j is also increased, heating of the coil 2e can be effectively cooled. In the embodiment shown in Fig. 4, when the outer diameter of the core of is set at 53.2 mm, the width of the open groove 2j is set at 4 mm and the depth of the open groove 2j is set at 2 mm, a surface area of the open groove 2j is 348 mm². When an experiment was made with the commutator motor 2, the input capacity of which was about 2500 W, an increase in the temperature of the coil 2e could be suppressed to be not more than about 92 K (kelvin) as shown by the point "a" of the characteristic diagram of Fig. 6 as compared with the conventional resin molding armature, the core outer circumferential face of which was flat.

A shape of the open groove 2j formed according to the present invention may be different for each slot 2g of the core 2f. Fig. 5 is a view showing a shape of the section of the open groove 2j of the second embodiment of the present invention. In this case, the shape of the section of the open groove 2j is a substantial trapezoid. When the mold releasing property is taken into account, with respect to the slot 2g located at a position in the radial direction close to the sliding direction (The sliding direction is the radial direction of 45° in the case of Fig. 5.), it is possible to provide an open groove 2j, the surface area of which is large, that is, it is possible to provide an open groove 2j, the bottom width of the groove of which is large. When the shape of the section of the open groove 2j is made to be different for each slot as described above, it is possible to increase the surface area of the open groove 2j. In this second embodiment, when the outer diameter of the core 2f is set at 53.2 mm, the width of the open groove 2j is set at 4 mm and the depth of the open groove 2j is set at 2 mm in the same manner as that of the first embodiment, an average surface area of the open groove is 425 mm². As a result, as shown by the point "b" in the characteristic diagram of Fig. 6, the cooling performance of the resin molding armature 2a can be enhanced according to an increase in the area which is larger than the open groove surface area 348 mm² of the first embodiment. Accordingly, it was possible to reduce a rise of the temperature of the coil 2e to be not more than 85 K.

The shape of the cross section of the open groove 2j is not limited to the specific shape of the above embodiment. Variations may be made without departing from a range in which the mold releasing property of the die is allowed. The point "c" shown in the characteristic diagram of Fig. 6 indicates a rise in the temperature of the coil 2e in the case where the above four split type die is used and the surface area of the open groove 2j is made to be smaller than that of the first and the second embodiment, that is, in the case where the open groove area is made to be 300 mm². In this case, since the surface area of the open groove is decreased, the temperature of the coil 26 is raised. As can be clearly seen in Fig. 6, when the surface area of the open groove portion of the open groove 2j is increased, it is possible to reduce a rise in the temperature of the resin molding armature 2a. Especially, it is possible to reduce a rise in the temperature of the coil 2e.

The present invention is specifically explained above on the basis of the embodiment of the invention. However, it should be noted that the present invention is not limited to the above specific embodiment. Variations may be made by those skilled in the art without departing from the scope of the appended claims.

## Claims

1. An electric motor (2) comprising:
an armature (2a) being fixed to a rotary shaft (2d), the armature comprising:
a core (2f) having a plurality of slots extending in an axial direction;
a coil (2e) wound around the core in the axial direction in the plurality of slots; and
a pair of coil end portions (2e1, 2e2) arranged at both end portions in the axial direction of the core, at which the coil wound in the slots protrudes from the slots in the axial direction;
a cooling fan (2c) fixed to the rotary shaft; and
a molding resin filling layer (9a) for covering the coil wound in the plurality of slots and for filling the plurality of slots to the same circumferential face as the outer circumferential face of the core in each slot,
the armature further including open grooves (2j) extending in the axial direction, formed on the circumferential face of the molding resin filling layer filled into the plurality of slots.

2. The electric motor (2) according to claim 1, wherein dimensions of a cross-section in the radial direction perpendicular to the axial direction of the open groove (2j) formed in each slot on the molding resin filling layer are different from dimensions of cross-sections formed in a pair of slots adjacent to the slot.

3. The electric motor (2) according to claim 1 or 2, wherein the pair of coil end portions (2e1, 2e2) are respectively covered with a molding resin covering layer (9b, 9c).

4. The electric motor (2) according to any one of claims 1 to 3, wherein the molding resin filling layer (9a), which has been filled into each slot, is made up of a layer formed by conducting molding in such a manner that a die, which can be split into pieces at least in four directions in the radial direction of the core, is closed onto the outer circumferential face of the core and molding is conducted, and the open groove (2j) is formed by a protrusion provided in a cavity of the die.

5. An electric tool comprising the electric motor of claim 1.

6. The electric tool according to claim 5, wherein dimensions of a cross-section in the radial direction perpendicular to the axial direction of the open groove (2j) formed in each slot on the molding resin filling layer of the armature are different from the dimensions of the cross-sections formed in a pair of slots adjacent to the slot.

7. The electric tool according to claim 5 or 6, wherein the pair of coil end portions (2e1, 2e2) of the armature are respectively covered with a molding resin covering layer (9b, 9c).

## Patentansprüche

1. Elektromotor (2), umfassend:
einen Anker (2a), der an einer rotierenden Welle (2d) befestigt ist, wobei der Anker umfasst:
einen Kern (2f) mit mehreren in einer axialen Richtung verlaufenden Löchern;
eine um den Kern in der axialen Richtung in den mehreren Löchern gewundene Spule (2e); und
ein Paar von Spulenendabschnitten (2e1, 2e2), die an beiden Endabschnitten des Kerns in der axialen Richtung angeordnet sind und an denen die in den Löchern gewundene Spule aus den Löchern in der axialen Richtung hervorragt;
ein an der rotierenden Welle befestigtes Kühlgebläse (2c); und
eine Pressharz-Füllschicht (9a) zum Bedecken der in den mehreren Löchern gewundenen Spule und zum Füllen der mehreren Löcher bis zur gleichen Umfangsfläche wie die äußere Umfangsfläche des Kerns in jedem Loch,
wobei der Anker ferner offene Nuten (2j) enthält, die in der axialen Richtung verlaufen und auf der Umfangsfläche der Pressharz-Füllschicht, die in die mehreren Löcher gefüllt ist, gebildet ist.

2. Elektromotor (2) nach Anspruch 1, wobei die Abmessungen eines Querschnitts der in jedem Loch gebildeten offenen Nut (2j) in der radialen Richtung senkrecht zur axialen Richtung auf der Pressharz-Füllschicht von den Abmessungen von in einem Paar benachbarter Löcher gebildeten Querschnitten verschieden sind.

3. Elektromotor (2) nach Anspruch 1 oder 2, wobei das Paar von Spulenendabschnitten (2e1, 2e2) jeweils mit einer Pressharz-Abdeckschicht (9b, 9c) bedeckt sind.

4. Elektromotor (2) nach einem der Ansprüche 1 bis 3, wobei die Pressharz-Füllschicht (9a), die in jedes Loch gefüllt worden ist, aus einer Schicht hergestellt ist, die durch Ausführen eines Formprozesses auf solch eine Weise gebildet wird, dass eine Form, die in mindestens vier Richtungen in der radialen Richtung des Kerns in Teile getrennt werden kann, die äußere Umfangsfläche des Kerns umschließt und der Formprozess ausgeführt wird, und die offene Nut (2j) durch einen in einer Aushöhlung der Form angeordneten Vorsprung gebildet wird.

5. Elektrowerkzeug, umfassend den Elektromotor nach Anspruch 1.

6. Elektrowerkzeug nach Anspruch 5, wobei die Abmessungen eines Querschnitts der in jedem Loch gebildeten offenen Nut (2j) in der radialen Richtung senkrecht zur axialen Richtung auf der Pressharz-Füllschicht von den Abmessungen von in einem Paar benachbarter Löcher gebildeten Querschnitten verschieden sind.

7. Elektrowerkzeug nach Anspruch 5 oder 6, wobei das Paar von Spulenendabschnitten (2e1, 2e2) des Ankers jeweils mit einer Pressharz-Abdeckschicht (9b, 9c) bedeckt sind.

## Revendications

1. Moteur électrique (2) qui comprend :
une armature (2a) fixée sur un arbre rotatif (2d), l'armature comprenant :
un noyau (2f) ayant une pluralité de fentes qui s'étendent dans une direction axiale ;
une bobine (2e) enroulée autour dudit noyau dans la direction axiale dans la pluralité de fentes ; et
une paire de parties d'extrémité de bobine (2e1, 2e2) disposées aux deux extrémités dans la direction axiale dudit noyau, au niveau de laquelle la bobine enroulée dans les fentes sort desdites fentes dans la direction axiale ;
un ventilateur de refroidissement (2c) fixé sur l'arbre rotatif ; et
une couche de remplissage de résine de moulage (9a) destinée à recouvrir la bobine enroulée dans la pluralité de fentes, et à remplir la pluralité de fentes jusqu'à la même face circonférentielle que la face circonférentielle extérieure du noyau dans chaque fente,
l'armature comprenant en outre des rainures ouvertes (2j) qui s'étendent dans la direction axiale, formées sur la face circonférentielle de la couche de remplissage de résine de moulage remplie dans la pluralité de fentes.

2. Moteur électrique (2) selon la revendication 1, dans lequel les dimensions d'une section transversale dans la direction radiale perpendiculaire à la direction axiale de la rainure ouverte (2j) formée dans chaque fente sur la couche de remplissage de résine de moulage sont différentes des dimensions de sections transversales formées dans une paire de fentes adjacentes à ladite fente.

3. Moteur électrique (2) selon la revendication 1 ou 2, dans lequel la paire de parties d'extrémité de bobine (2e1, 2e2) est respectivement recouverte d'une couche de recouvrement en résine de moulage (9b, 9c).

4. Moteur électrique (2) selon l'une quelconque des revendications 1 à 3, dans lequel la couche de remplissage en résine de moulage (9a), qui a été remplie dans chaque fente, est composée d'une couche formée en effectuant un moulage de sorte qu'une matrice, qui peut être séparée en plusieurs morceaux dans au moins quatre directions dans la direction radiale du noyau, soit fermée sur la face circonférentielle extérieure du noyau et que le moulage soit effectué, et la rainure ouverte (2j) est formée par une saillie prévue dans une cavité de la matrice.

5. Outil électrique qui comprend le moteur électrique selon la revendication 1.

6. Outil électrique selon la revendication 5, dans lequel les dimensions d'une section transversale dans la direction radiale perpendiculaire à la direction axiale de la rainure ouverte (2j) formée dans chaque fente sur la couche de remplissage de résine de moulage de l'armature sont différentes des dimensions des sections transversales formées dans une paire de fentes adjacentes à ladite fente.

7. Outil électrique selon la revendication 5 ou 6, dans lequel la paire de parties d'extrémité de bobine (2e1, 2e2) de l'armature est respectivement recouverte d'une couche de recouvrement en résine de moulage (9b, 9c).
